Europäisches Patentamt

European Patent Office

Office européen des brevets

(11) Veröffentlichungsnummer : **0 228 049**
**B1**

# (12) EUROPÄISCHE PATENTSCHRIFT

(45) Veröffentlichungstag der Patentschrift :
19.10.88

(21) Anmeldenummer : 86117760.8

(22) Anmeldetag : 19.12.86

(51) Int. Cl.⁴ : **B 60 K 17/356**

(54) Antriebseinrichtung für Kraftfahrzeuge, insbesondere Personenkraftwagen.

(30) Priorität : 20.12.85 DE 3545482

(43) Veröffentlichungstag der Anmeldung :
08.07.87 Patentblatt 87/28

(45) Bekanntmachung des Hinweises auf die Patenterteilung : 19.10.88 Patentblatt 88/42

(84) Benannte Vertragsstaaten :
AT CH DE ES FR GB IT LI SE

(56) Entgegenhaltungen :
DE-C- 1 159 279
FR-A- 2 469 296
US-A- 3 439 766

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Gilke, Paul K., Dipl.-Ing.
Schlehenring 22
D-8000 München 81 (DE)
Erfinder : Werner, Jürgen, Dipl.-Ing.
Prof. Angermair Ring 24
D-8011 Kirchheim (DE)

(74) Vertreter : Draeger, Karlfried
Bayerische Motoren Werke Aktiengesellschaft Postfach 40 02 40 Petuelring 130 - AJ 36
D-8000 München 40 (DE)

**Beschreibung**

Die Erfindung betrifft eine Antriebseinrichtung für Kraftfahrzeuge, insbesondere Personenkraftwagen, nach dem Oberbegriff des Anspruchs 1. Sie bezweckt die weitere Ausbildung einer Antriebseinrichtung dieser Art, die Gegenstand einer gleichzeitig eingereichten anderen Patentanmeldung (Europäische Patentanmeldung 86117761.6 mit Priorität vom 20.12.1985, Veröffentlichungsnummer EP-A-2300 22) ist, und zwar hinsichtlich der Schaltkupplung.

Die bei der Antriebseinrichtung nach der anderen Patentanmeldung vorgesehene druckmittelbetätigte Schaltkupplung kann sowohl formals auch kraftschlüssig ausgebildet sein. Nach der Erfindung ist eine besonders vorteilhafte formschlüssige Ausbildung vorgesehen. Ihre Merkmale sind im Anspruch 1 angegeben. Durch die Erfindung wird erreicht, daß die Schaltkupplung unter Berücksichtigung der speziellen Anforderungen des Einsatzgebletes bei großer Schaltsicherheit in einfacher Weise robust und kompakt gestaltet sein kann.

Zweckmäßige Ausgestaltungen der Erfindung sind in den Unteransprüchen gekennzeichnet.

In der Zeichnung ist ein Ausführungsbeispiel der Erfindung schematisch dargestellt, und zwar zeigt

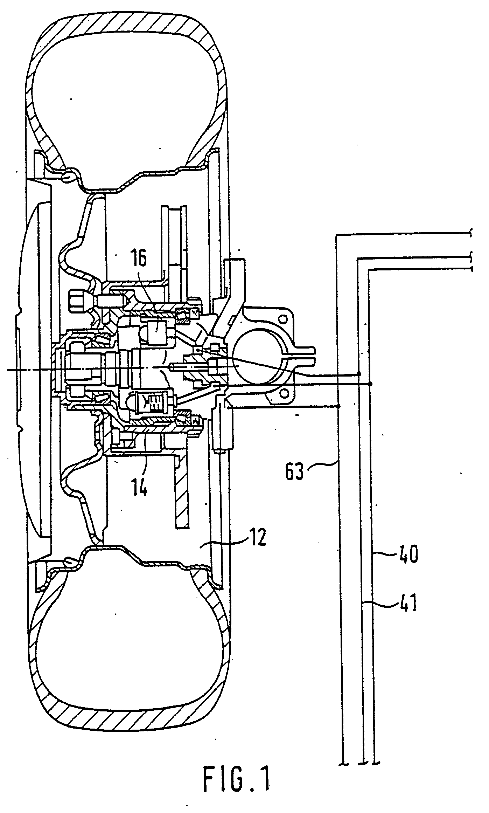

Fig. 1 einen Axialschnitt durch das linke Fahrzeug-Vorderrad eines Personenkraftwagens mit Standardantrieb, also vorn angeordnetem Fahrzeugmotor und mechanischem Hinterradantrieb,

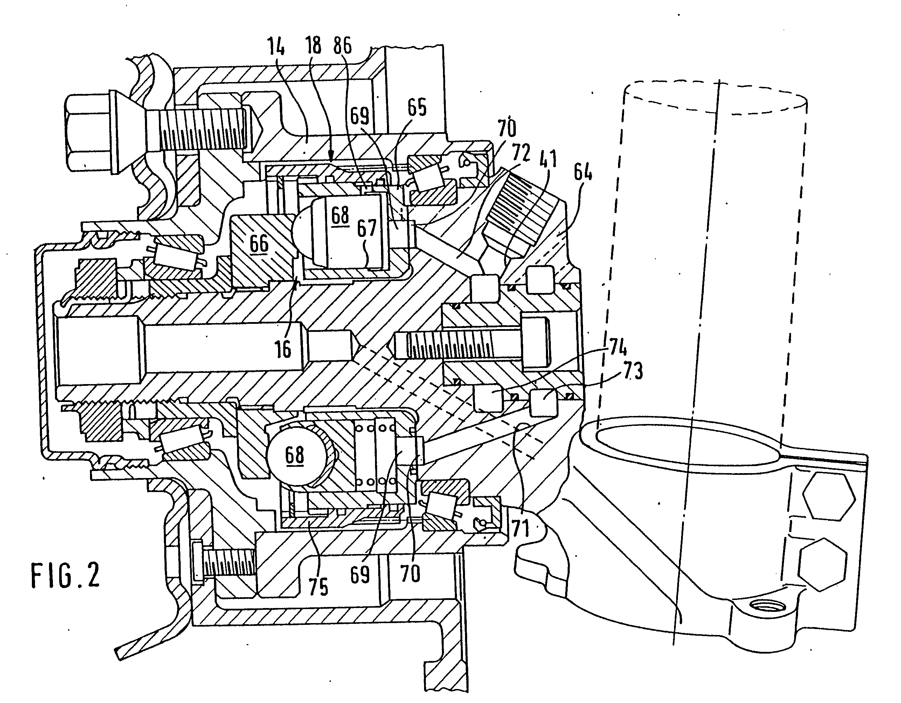

Fig. 2 einen Axialschnitt durch den Nabenbereich des linken Fahrzeug-Vorderrades nach Fig. 1 in größerem Maßstab,

Fig. 3 eine Einzelheit der Darstellung nach Fig. 2 in noch größerem Maßstab bei ausgekuppeltem Zustand,

Fig. 4 die Einzelheit nach Fig. 3 bei gekuppeltem Zustand und

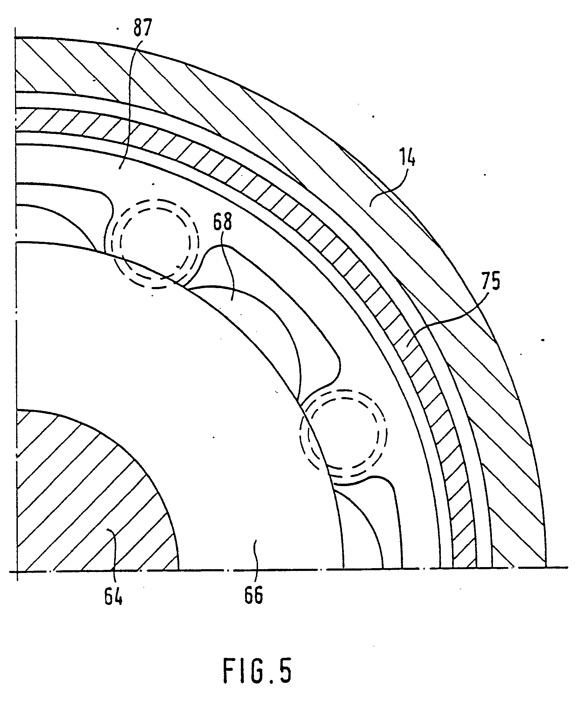

Fig. 5 einen Teilschnitt nach der Linie V-V der Fig. 4.

Die folgenden Erläuterungen für das linke Fahrzeug-Vorderrad gelten für das spiegelbildlich ausgebildete, nicht dargestellte rechte Fahrzeug-Vorderrad entsprechend.

Das nicht mechanisch angetriebene lenkbare Fahrzeug-Vorderrad 12 birgt in seiner Nabe 14 einen Hydromotor 16, der als Axialkolben-Schrägscheiben-Maschine ausgebildet ist. Der Hydromotor 16 ist durch eine Hydraulikleitung 40 für Vorwärtsfahrt und eine Hydraulikleitung 41 für Rückwartsfahrt mit einer nicht dargestellten Hydropumpe verbunden. Eine Leckageleitung 63 führt von dem Hydromotor 16 zu einem nicht dargestellten Behälter für Hydraulikflüssigkeit.

Die Nabe 14 ist auf einem Achsschenkel 64 drehbar gelagert. Auf diesem ist ferner die Zylindertrommel 65 des Hydromotors 16 drehbar gelagert, während die Schrägscheibe 66 des Hydromotors 16 mit dem Achsschenkel 64 fest verbunden ist. Die Zylindertrommel 65 des Hydromotors 16 nimmt in acht achsparallel auf einem Kreis angeordneten Axialzylindern 67 acht Axialkolben 68 gleitbar auf. Diese werden durch Federkraft stets in Anlage an der Schrägscheibe 66 gehalten. Die Bodenwand der Zylindertrommel 65 weist im Bereich jedes der Axialzylinder 67 Bohrungen 69 für die Zu- und Abfuhr von Hydraulikflüssigkeit auf. Die Bohrungen 69 können Steuerschlltze 70 überfahren, die in dem Achsschenkel 64 vorgesehen und an Verbindungskanäle 71, 72 angeschlossen sind. Der Verbindungskanal 71 ist innerhalb des Achsschenkels 64 mit einem Ringkanal 73 verbunden, der mit der Hydraulikleitung 40 für Vorwärtsfahrt verbunden ist. Der Verbindungskanal 72 ist innerhalb des Achsschenkels 64 mit einem Ringkanal 74 verbunden, der mit der Hydraulikleitung 41 für Rückwärtsfahrt verbunden ist.

Der Außendurchmesser der Zylindertrommel 65 des Hydromotors 16 ist kleiner als der Innendurchmesser der Nabe 14. In dem zwischen der Zylindertrommel 65 und der Nabe 14 befindlichen radialen Spalt ist eine Schaltkupplung 18 angeordnet. Diese weist eine Schaltmuffe 75 auf, welche die Zylindertrommel 65 umschließt und in axialer Richtung geringfügig länger als diese ist. Die Schaltmuffe 75 weist an ihrem Ende, das der Außenseite des Fahrzeug-Vorderrads 12 zugewandt ist, eine Innenverzahnung 76 mit achsparallelen Zähnen auf. Diese Innenverzahnung 76 befindet sich in städigem Eingriff mit einer entsprechenden Außenverzahnung 77, mit welcher die Zylindertrommel 65 an ihrem der Außenseite des Fahrzeug-Vorderrades 12 zugewandten Ende versehen ist. Die Schaltmuffe 75 ist an ihrem anderen Ende mit einer Außenverzahnung 78 mit ebenfalls achsparallelen Zähnen versehen. Eine dieser Außenverzahnung 78 entsprechende Innenverzahnung 79 ist an einem radial nach innen vorspringenden Bund der Nabe 14 vorgesehen.

An dem Ende, an dem die Außenverzahnung 78 vorgesehen ist, weist die Schaltmuffe 75 einen radial nach innen gerichteten Bund 80 auf, dessen Innenseite eine Kreisringfläche 90 bildet. Der Bund 80 umschließt einen zylindrischen Endabschnitt 81 der Zylindertrommel 65. Der Außendurchmesser des zylindrischen Endabschnitts 81 ist kleiner als der Fußkreisdurchmesser der Außenverzahnung 77 der Zylindertrommel 65. Der Unterschied zwischen den beiden Durchmessern beträgt etwa Zahnhöhe. Der zylindrische Endabschnitt 81 weist eine derartige Länge auf, daß zwischen seiner Außenseite, der Kreisringfläche 90, einer an diese anschließenden zylindrischen Innenseite der Schaltmuffe 75 und einer kreisringförmigen Stirnbegrenzungsfläche der Zylindertrommel 65 eine Ringkammer 82 gebildet ist. Eine Ringdichtung 83, die etwa auf halber Länge der Schaltmuffe 75 an deren Innenseite angeordnet ist, und eine Ringdichtung 84, die in dem Bund 80 angeordnet ist, dienen im Zusammenwirken mit zylindrischen Flächen der Zylindertrommel 65 dem flüssigkeitsdichten Abdichten der Ringkammer 82.

Die als Sackbohrungen ausgebildeten Axialzylinder 67 weisen am fußseitigen Ende jeweils eine Erweiterung 85 auf. Bei einem der Axialzylinder 67 ist die Erweiterung 85 durch eine Verbindungsbohrung 86 mit der Ringkammer 82 verbunden.

An dem Ende der Schaltmuffe 75, an welchem diese die Innenverzahnung 76 aufweist, ist an der Schaltmuffe 75 eine Kreisringscheibe 87 befestigt, die einen radial nach innen weisenden Bund der Schaltmuffe 75 bildet. Zwischen den Axialzylindern 67 der Zylindertrommel 65 des Hydromotors 16 sind im äußeren Bereich der Zylindertrommel 65 acht achsparallele Sackbohrungen 88 vorhanden. In diesen ist jeweils eine als Druckfeder ausgebildete Rückholfeder 89 angeordnet, die sich einerseits am Grund der Sackbohrung 88 und andererseits an der Kreisringscheibe 87 abstützt.

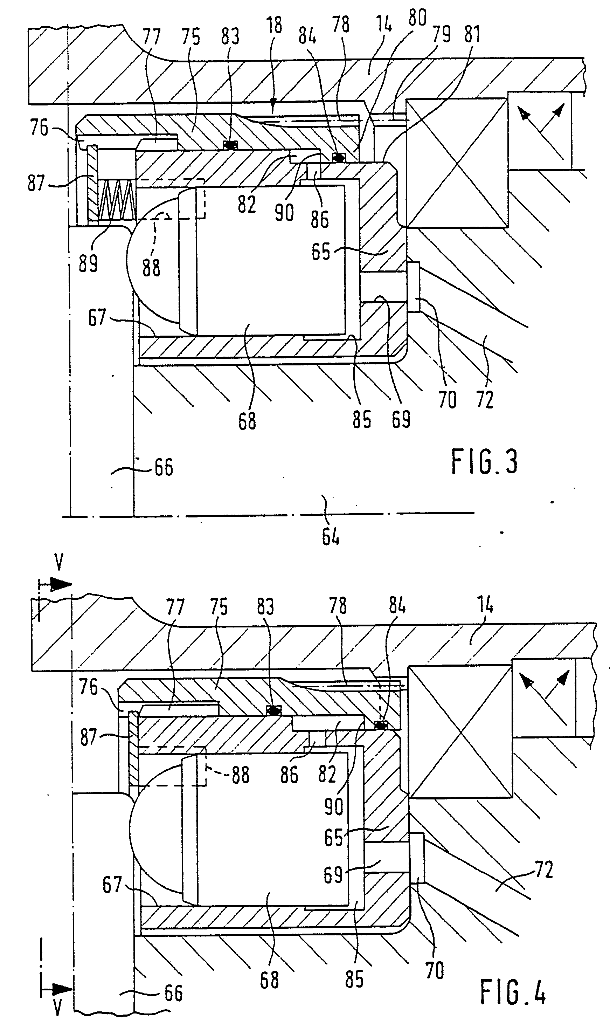

Bei in Ruhe befindlicher Hydropumpe und damit druckentlastetem Hydromotor 16 befindet sich die Schaltmuffe 75 infolge der Wirkung der Rückholfedern 89 in der in Fig. 3 dargestellten Ruhelage. In dieser Schaltstellung ist die Schaltkupplung 18 entkuppelt.

Wird die Hydraulikanlage eingeschaltet, baut sich in den mit Hydraulikflüssigkeit gefüllten Räumen ein Druck auf. Je nach der gewählten Fahrtrichtung bilden entweder bei Vorwärtsfahrt der Verbindungskanal 71 und der Ringkanal 73 oder bei Rückwärtsfahrt der Verbindungskanal 72 und der Ringkanal 74 Bestandteile der Hochdruckseite des die Hydropumpe und den Hydromotor 16 einschließenden geschlossenen Hydraulikkreises. Die jeweils anderen Kanäle bilden Bestandteile der Niederdruckseite, welche die Hydraulikflüssigkeit von dem Hydromotor 16 zu der Hydropumpe zurückleitet. Sowohl auf der Hochdruck- als auch auf der Niederdruckseite des geschlossenen Hydraulikkreises wird durch zwei einstellbare Druckbegrenzungsventile im Betriebszustand ein Mindestdruck aufrecht erhalten, der beispielsweise 15 bar betragen kann. Der Druck auf der jeweiligen Hochdruckseite kann in Abhängigkeit von der Gaspedalstellung bis zu einem oberen Grenzwert ansteigen.

Die dem Hydromotor 16 auf der Hochdruckseite zugeleitete Hydraulikflüssigkeit bewirkt eine Drehbewegung der Zylindertrommel 65 um den feststehenden Achsschenkel 64. Dabei kann zunächst das Fahrzeug-Vorderrad 12 stillstehen. Sobald der Axialzylinder 67, von welchem die Verbindungsbohrung 86 aus in die Ringkammer 82 führt, in den Bereich der Hochdruckseite gelangt und damit Hydraulikflüssigkeit zugeleitet bekommt, gelangt diese durch die Verbindungsbohrung 86 auch in die Ringkammer 82 zwischen der Zylindertrommel 65 und der Schaltmuffe 75. Die dadurch bewirkte Beaufschlagung der Kreisringfläche 90 bewirkt unter Vergrößerung der Ringkammer 82 ein Verschieben der Schaltmuffe 75 entgegen der Kraft der Rückholfedern 89 in axialer Richtung auf die Innenseite des Fahrzeug-Vorderrades 12 zu. Dabei gelangen die Außenverzahnung 78 der Schaltmuffe 75 und die Innenverzahnung 79 der Nabe 14 in Eingriff (Fig. 4). In dieser Schaltstellung sind die Zylindertrommel 65 des Hydromotors 16 und die Nabe 14 miteinander gekuppelt. Das Fahrzeug-Vorderrad 12 und die Zylindertrommel 65 des Hydromotors 16 laufen synchron.

Bei Ausschalten der Hydraulikanlage werden die beiden Druckbegrenzungsventile in die Ruhestellung zurückgestellt und der Hydraulikkreis zum Behälter für die Hydraulikflüssigkeit hin entlastet. Bei dieser Betriebslage stellen die Rückholfedern 89 die Schaltmuffe 75 aus der gekuppelten Stellung in die entkuppelte Stellung zurück (Fig. 3). Die Rückholfedern 89 sind derart ausgelegt, daß sie ein Verschieben der Schaltmuffe 75 in die gekuppelte Stellung bei Erreichen des unteren Grenzwertes des Druckes im Hydraulikkreis ermöglichen, die Rückstellung der Schaltmuffe 75 jedoch bewirken, sobald der Druck im Hydraulikkreis auf einen bestimmten Betrag, beispielsweise 8 bis 10 bar, unterhalb des unteren Druck-Grenzwertes gesunken ist.

In Abweichung von dem Ausführungsbeispiel können mehrere oder sämtliche Erweiterungen 85 der Axialzylinder 67 durch Verbindungsbohrungen 86 mit der Ringkammer 82 verbunden sein.

Außerdem kann die Druckbeaufschlagung der Kreisringfläche 90 der Schaltmuffe 75 auch auf anderem Wege erreicht werden. Beispeilsweise kann in der Kreisringfläche, an welcher sich die Zylindertrommel 65 des Hydromotors 16 in axialer Richtung abstützt, entweder an der Zylindertrommel 65 oder an dem Achsschenkel 64 ein Ringkanal vorgesehen sein, der mit den beiden Hydraulikleitungen 40, 41 verbunden ist, welche die Hydropumpe mit dem Hydromotor 16 verbinden. Dieser Ringkanal kann mit der Ringkammer 82 durch einen Verbindungskanal verbunden sein, der in der Zylindertrommel 65 verläuft. Auch bei diesem Beispiel können statt des einen Verbindungskanals mehrere Verbindungskanäle über den Umfang verteilt vorgesehen sein. Bei diesem Ausführungsbeispiel sind in den beiden Verbindungsleitungen zwischen den Hydraulikleitungen 40, 41 und dem in der kreisringförmigen Abstützfläche befindlichen Ringkanal jeweils ein ein- und ausschaltbares Sperrventil angeordnet. Dieses verhindert, daß das Druckmittel, das über die jeweilige Hochdruckseite der Ringkammer 82 zugeleitet wird, auf der jeweiligen Niederdruckseite unbeabsichtigt abfließt. Darüber hinaus ist eine Betätigung der Schaltkupplung nicht durch das Arbeitsdruckmittel des Hydromotors 16, sondern durch gesonderte Druckmittel möglich.

Die Antriebseinrichtung kann nicht nur bei nicht mechanisch angetriebenen Fahrzeug-Vorderrädern, sondern in entsprechender Weise bei einem Fahrzeug-Frontantrieb bei den mechanisch nicht angetriebenen Fahrzeug-Hinterrädern eingesetzt werden.

**Patentansprüche**

1. Antriebseinrichtung für Kraftfahrzeuge, insbesondere Personenkraftwagen, mit mechanischer Antriebsverbindung zwischen dem Fahrzeugmotor und den Fahrzeugrädern einer der Fahrzeugachsen sowie mit zu- und abschaltbarem Zusatzantrieb für die Fahrzeugräder (12) der anderen Fahrzeugachse, bei welcher der Zusatzantrieb als hydrostatischer Einzelradantrieb ausgebildet ist, bei dem in den Naben (14) der Fahrzeugräder der Zusatzantriebsachse jeweils als Zusatzantriebsmotor ein als Axialkolbenkonstantmotor in Schrägscheiben-Bauart und als Radnabenmotor ausgebildeter Hydromotor (16) angeordnet ist, bei welcher ferner wenigstens eine von dem Fahrzeugmotor antreibbare Hydropumpe vorgesehen ist, welche den Hydromotoren die Antriebsenergie liefert, und bei welcher weiter jeweils zwischen Hydromotor und Nabe des Fahrzeugrades eine druckmittelbetätigte Schaltkupplung (18) vorgesehen ist, dadurch gekennzeichnet, daß die Schaltkupplung (18) als Zahnkupplung mit einer die Zylindertrommel (65) des Hydromotors (16) umschließenden, in axialer Richtung verschiebbaren Schaltmuffe (75) ausgebildet ist, die wenigstens eine Kreisringfläche (90) für die Druckbeaufschlagung und eine Innen- und eine Außenverzahnung (76, 78) mit sich jeweils in axialer Richtung erstreckenden Zähnen aufweist, von denen die Innenverzahnung (76) sich in ständigem Eingriff mit einer entsprechenden Außenverzahnung (77) der Zylindertrommel (65) des Hydromotors (16) befindet und die Außenverzahnung (78) mit einer entsprechenden Innenverzahnung (79) der Nabe (14) des Fahrzeugrades (Fahrzeug-Vorderrad 12) in und außer Eingriff bringbar ist.

2. Antriebseinrichtung nach Anspruch 1, dadurch gekennzeichnet, daß zwischen der Zylindertrommel (65) des Hydromotors (16) und der Schaltmuffe (75) eine Ringkammer (82) vorgesehen ist und die Druckbeaufschlagungs-Kreisringfläche (90) der Schaltmuffe (75) einen Teil der Ringkammerwand bildet.

3. Antriebseinrichtung nach Anspruch 2, dadurch gekennzeichnet, daß die Ringkammer (82) mit dem Druckmittelraum der Zylindertrommel (65) des Hydromotors (16) verbunden ist und den beiden Hydraulikleitungen (40, 41), welche die Hydropumpe mit dem Hydromotor (16) verbinden, jeweils ein ein- und ausschaltbares Ventil zugeordnet ist, das im eingeschalteten Zustand erst oberhalb eines Mindestdruckes zum Druckmittelbehälter hin öffnet.

4. Antriebseinrichtung nach Anspruch 2, dadurch gekennzeichnet, daß die Ringkammer (82) mit den beiden Hydraulikleitungen (40, 41) verbunden ist, welche die Hydropumpe mit dem Hydromotor (16) verbinden, und in den beiden Verbindungsleitungen zwischen den Hydraulikleitungen (40, 41) und der Ringkammer (82) jeweils ein ein- und ausschaltbares Sperrventil angeordnet ist.

5. Antriebseinrichtung nach einem der Ansprüche 1 bis 4, dadurch gekennzeichnet, daß die Druckbeaufschlagungs-Kreisringfläche (90) der Schaltmuffe (75) dem Ende der Schaltmuffe (75) benachbart angeordnet ist, das der Fahrzeugrad-Innenseite zugewandt ist.

6. Antriebseinrichtung nach einem der Ansprüche 1 bis 5, dadurch gekennzeichnet, daß an dem Ende der Schaltmuffe (75), das der Fahrzeugrad-Außenseite zugewandt ist, zwischen der Schaltmuffe (75) und der Zylindertrommel (65) des Hydromotors (16) wenigstens eine Rückholfeder (89) angeordnet ist, deren Wirkrichtung in Schieberichtung der Schaltmuffe (75) verläuft.

7. Antriebseinrichtung nach Anspruch 6, dadurch gekennzeichnet, daß mehrere Rückholfedern (89) gleichmäßig über den Umfang verteilt vorgesehen sind.

8. Antriebseinrichtung nach Anspruch 7, dadurch gekennzeichnet, daß die Rückholfedern (89) jeweils in den Bereichen zwischen den die Axialkolben (68) aufnehmenden Axialzylindern (67) angeordnet sind.

9. Antriebseinrichtung nach Anspruch 6, 7 oder 8, dadurch gekennzeichnet, daß die Schaltmuffe (75) an ihrem der Fahrzeugrad-Außenseite zugewandten Ende einen radial nach innen ragenden Bund (Kreisringscheibe 87) aufweist, der als Federabstützung dient.

10. Antriebseinrichtung nach einem der vorhergehenden Ansprüche, dadurch gekennzeichnet, daß die Außenverzahnung (78) der Schaltmuffe (75) an dem Ende der Schaltmuffe (75) vorgesehen ist, das der Fahrzeugrad-Innenseite zugewandt ist.

**Claims**

1. Drive means for motor vehicles, especially passenger cars, comprising a mechanical drive connection between the vehicle engine and the vehicle wheels of one of the vehicle axles and an on/off switchable additional drive for the vehicle wheels (12) of the other vehicle axle, the additional drive being a hydrostatic single-wheel drive with a fluid power motor (16) in the form of a wheel hub motor and of an axial-piston fixed-displacement motor with an inclined plate being disposed as an additional drive motor in the hub (14) of each of the vehicle wheels on the additional drive axle, and at least one fluid power pump being provided which is drivable by the vehicle engine and which is arranged to supply driving energy to the fluid power motors, there being a pressure-medium actuated clutch (18) between each of the fluid power motors and the respective vehicle wheel hub, characterised in that the clutch (18) is formed as a toothed clutch comprising a gearshift sleeve (75) surrounding the cylinder drum (65) of the fluid power motor (16) and movable in the axial direction and having at least one annular surface (90) for applying pressure and inner and outer teeth (76, 78) each extending in the axial direction, the inner teeth (76) being in constant engagement with corresponding outer teeth (77) on the cylinder drum (68) of the fluid power motor (16) and the outer teeth (78) being movable into and out of engagement with corresponding inner teeth (79) on the hub (14) of the vehicle wheel (vehicle front wheel 12).

2. Drive means according to Claim 1, characterised in that an annular chamber (82) is provided between the gearshift sleeve (75) and the cylinder drum (65) of the fluid power motor (16), and the pressure-applying annular surface (90) of the gearshift sleeve (75) forms part of the annular chamber wall.

3. Drive means according to Claim 2, characterised in that the annular chamber (82) is connected to the pressure-medium space in the cylinder drum (65) of the fluid power motor (16), and the two hydraulic lines (40, 41) connecting the fluid power pump to the fluid power motor (16) are each associated with an on/off valve which, when switched on, opens towards the pressure-medium container only when a minimum pressure is exceeded.

4. Drive means according to Claim 2, characterised in that the annular chamber (82) is connected to the two hydraulic lines (40, 41) connecting the fluid power pump to the fluid power motor (16), and an on/off check valve is disposed in each of the two connecting lines between the hydraulic lines (40, 41) and the annular chamber (82).

5. Drive means according to any one of Claims 1 to 4, characterised in that the pressure-applying annular surface (90) of the gearshift sleeve (75) is disposed adjacent that end of the gearshift sleeve (75) which faces the inside of the vehicle wheel.

6. Drive means according to any one of Claims 1 to 5, characterised in that at least one return spring (89) is disposed at that end of the gearshift sleeve (75) which faces the outside of the vehicle wheel between the gearshift sleeve (75) and the cylinder drum (65) of the fluid power motor (16), the direction of action of the spring extending in the direction in which the gearshift sleeve (75) slides.

7. Drive means according to Claim 6, characterised in that a number of return springs (89) are distributed uniformly over the periphery.

8. Drive means according to Claim 7, characterised in that the return springs (89) are each disposed in the areas between the axial cylinders (67) receiving the axial pistons (68).

9. Drive means according to Claim 6, 7 or 8, characterised in that the gearshift sleeve (75), at its end facing the outside of the vehicle wheel, has a radiallyinward collar (annular disc 87) serving as a spring support.

10. Drive means according to any one of the preceding Claims, characterised in that the outer teeth (78) of the gearshift sleeve (75) are provided at that end of the gearshift sleeve (75) which faces the inside of the vehicle wheel.

**Revendications**

1. Dispositif de propulsion pour véhicules automobiles, notamment pour voitures particulières, avec une liaison mécanique d'entraînement entre le moteur du véhicule et les roues de l'un des essieux du véhicule, ainsi qu'avec un entraînement supplémentaire, susceptible d'être accouplé et désaccouplé, pour les roues (12) de l'autre essieu du véhicule, dispositif dans lequel cet entraînement supplémentaire revêt la forme d'un entraînement hydraulique de roue indépendante, entraînement dans lequel un moteur hydraulique (16) sous la forme d'un moteur constant à pistons axiaux, du type de construction à disque oblique et conçu en tant que moteur de moyeu de roue, est disposé comme moteur d'entraînement supplémentaire dans chacun des moyeux (14) des roues (12) de l'autre essieu du véhicule, et il est en outre prévu pour ces moteurs hydrauliques au moins une pompe hydraulique susceptible d'être entraînée par le moteur du véhicule et qui fournit aux moteurs hydrauliques l'énergie d'entraînement, le dispositif comportant, en outre, entre chaque moteur hydraulique et le moyeu de la roue du véhicule, un embrayage (18) actionné par un fluide sous pression, dispositif de propulsion caractérisé en ce que l'embrayage (18) revêt la forme d'un embrayage à denture, avec un manchon de manœuvre (75) susceptible de coulisser en direction axiale et entourant le tambour cylindrique (65) du moteur hydraulique (16), ce manchon comportant au moins une surface annulaire circulaire (90) destinée à recevoir la pression, et une denture interne et externe (76, 78), avec respectivement des dents s'étendant en direction axiale, la denture interne étant constamment en prise avec une denture externe correspondante (77) du tambour cylindrique (65) du moteur hydraulique (16), tandis que la denture externe (78) est susceptible d'être amenée en prise et hors de prise avec une denture interne correspondante (79) du moyeu (14) de la roue du véhicule (roue avant 12 du véhicule).

2. Dispositif de propulsion selon la revendication 1, caractérisé en ce qu'entre le tambour cylindrique (65) du moteur hydraulique (16) et le manchon de manœuvre (75), il est prévu une chambre annulaire (82), et la surface annulaire circulaire (90), soumise à la pression, du manchon de manœuvre (75) constitue une partie de la paroi de cette chambre annulaire.

3. Dispositif de propulsion selon la revendication 2, caractérisé en ce que la chambre annulaire (82) est reliée à la chambre de fluide sous pression du tambour cylindrique (65) du moteur hydraulique (16), et une soupape, susceptible d'être mise en circuit et hors circuit, est associée à chacune des liaisons hydrauliques (40, 41) qui relient la pompe hydraulique au moteur hydraulique (16), cette soupape, quand elle est en circuit, ne s'ouvrant vers le réservoir de fluide sous pression qu'au-dessus d'une pression minimale.

4. Dispositif de propulsion selon la revendication 2, caractérisé en ce que la chambre annulaire (82) est reliée aux deux liaisons hydrauliques (40, 41) qui relient la pompe hydraulique au moteur hydraulique (16), tandis qu'une soupape de non-retour, susceptible d'être mise en circuit et hors circuit, est disposée sur chacune des deux canalisations de liaison entre les liaisons hydrauliques (40, 41) et la chambre annulaire (82).

5. Dispositif de propulsion selon une des revendications 1 à 4, caractérisé en ce que la surface annulaire circulaire (90), recevant la pression, du manchon de manœuvre (75), est disposée au voisinage de l'extrémité du manchon de manœuvre (75) qui est en regard du côté interne de la roue du véhicule.

6. Dispositif de propulsion selon une des revendications 1 à 5, caractérisé en ce qu'au moins un ressort de rappel (89) est disposé entre le manchon de manœuvre (75) et le tambour cylindrique (65) du moteur hydraulique (16), l'action de ce ressort s'exerçant dans la direction de coulissement du manchon de manœuvre (75).

7. Dispositif de propulsion selon la revendication 6, caractérisé en ce qu'il est prévu plusieurs ressorts de rappel (89) uniformément répartis sur la périphérie.

8. Dispositif de propulsion selon la revendication 7, caractérisé en ce que les ressorts de rappel (89) sont respectivement disposés dans les intervalles entre les cylindres axiaux (67) dans lesquels sont logés les pistons axiaux (68).

9. Dispositif de propulsion selon la revendication 6, 7 ou 8, caractérisé en ce que le manchon de manœuvre (75) comporte, à son extrémité tournée vers le côté externe de la roue du véhicule, un bandeau faisant saillie radialement vers l'intérieur (disque annulaire circulaire 87), qui sert d'appui aux ressorts.

10. Dispositif de propulsion selon une des précédentes revendications, caractérisé en ce que la denture externe (78) du manchon de manœuvre (75) est prévue à l'extrémité de ce manchon de manœuvre (75) qui est tournée vers le côté interne de la roue du véhicule.

FIG.1

FIG.2

0 228 049

FIG. 3

FIG. 4

3

FIG.5